# EUROPÄISCHE PATENTSCHRIFT

(11) **EP 3 519 219 B1**
(45) Veröffentlichungstag und Bekanntmachung des Hinweises auf die Patenterteilung: **25.11.2020**
(21) Anmeldenummer: 17764372.3
(22) Anmeldetag: 05.09.2017
(51) Int. Cl.: B60J 10/75, B60J 10/18, B60Q 1/32, B60Q 1/26

(54) **FENSTERSCHACHTLEISTENANORDNUNG**
WINDOW BAY RUNNER ARRANGEMENT
DISPOSITION DE MOULURE DE FENÊTRE

(30) Priorität: 28.09.2016 DE 102016218755
(43) Veröffentlichungstag der Anmeldung: 07.08.2019
(73) Patentinhaber: Fysam Auto Decorative GmbH, 89555 Steinheim am Albuch (DE)
(72) Erfinder: VETTER, Rolf, 73102 Birenbach (DE); SIRRENBERG, Stefan, 42279 Wuppertal (DE)
(74) Vertreter: Dietz, Christopher Friedrich
(86) Internationale Anmeldenummer: PCT/EP2017/072221
(87) Internationale Veröffentlichungsnummer: WO 2018/059886

(56) Entgegenhaltungen:
- EP-A1- 2 930 062
- DE-A1- 19 911 424
- DE-A1-102014 220 630
- DE-A1-102015 100 327
- US-A- 5 463 831
- US-A- 5 472 544

## Beschreibung

Die Erfindung betrifft eine Fensterschachtleistenanordnung zur zumindest bereichsweisen Abdeckung eines Fensterschachts eines Kraftfahrzeugs, mit einem an einer Fahrzeughaut befestigbaren, einen Versteifungskern und eine den Versteifungskern aufnehmende Trägerhülle aufweisenden Fensterschachtleistenträger sowie einer an dem Fensterschachtleistenträger befestigten Fensterschachtleiste, wobei der Fensterschachtleistenträger eine Fahrzeughautaufnahme zur bereichsweisen Aufnahme der Fahrzeughaut aufweist und die Fensterschachtleiste auf einer der Fahrzeughautaufnahme abgewandten Seite des Fensterschachtleistenträgers an dem Fensterschachtleistenträger befestigt ist. Dokumente EP 2 930 062 und DE 10 2015 100 327 offenbaren zwei gattungsgemäße Fensterschachtleistenanordnungen mit Beleuchtung.

Die Fensterschachtleistenanordnung dient einerseits zur zumindest teilweisen Abdeckung des Fensterschachts des Kraftfahrzeugs gegenüber einer Außenumgebung und andererseits zur optisch gefälligen Gestaltung des Kraftfahrzeugs. Der Fensterschacht liegt an der Karosserie des Kraftfahrzeugs vor, beispielsweise an einer Tür des Kraftfahrzeugs. Der Fensterschacht dient der zumindest teilweisen Aufnahme einer Verglasung, insbesondere einer Fensterscheibe, die vorzugsweise verlagerbar ist, insbesondere in dem Fensterschacht versenkbar. Bei einer derartigen Ausgestaltung kann die Verlagerung beispielsweise derart erfolgen, dass die Verglasung in einer ersten Stellung eine Ausnehmung der Karosserie des Kraftfahrzeugs beziehungsweise ein Fenster des Kraftfahrzeugs dicht verschließt und in einer zweiten Stellung wenigstens bereichsweise freigibt. In der ersten Stellung ist die Verglasung größtenteils außerhalb des Fensterschachts angeordnet. In der zweiten Stellung greift die Verglasung dagegen weiter in den Fensterschacht ein als in der ersten Stellung. Insbesondere ist die Verglasung in der zweiten Stellung weiter in den Fensterschacht versenkt als in der ersten Stellung. Alternativ kann die Verglasung selbstverständlich auch ortsfest bezüglich der Karosserie angeordnet sein.

Der Fensterschacht wird außenseitig, also auf seiner der Außenumgebung des Kraftfahrzeugs zugewandten Seite, von der Fahrzeughaut begrenzt. Die Fensterschachtleistenanordnung ist an einer freien Kante, welche vorzugsweise eine Mündungsöffnung des Fensterschafts begrenzt, angeordnet beziehungsweise befestigt. Beispielsweise ist dies derart vorgesehen, dass eine Glasdichtung der Fensterschachtleistenanordnung an der Verglasung anliegt, insbesondere sofern sich diese in der ersten Stellung befindet. Die Glasdichtung verhindert insoweit, dass Feuchtigkeit zwischen der Verglasung und der Glasdichtung hindurch in den Fensterschacht gelangt.

Zur zuverlässigen Befestigung einerseits und zur optisch gefälligen Gestaltung des Kraftfahrzeugs andererseits besteht die Fensterschachtleistenanordnung zum einen aus dem Fensterschachtleistenträger und zum anderen aus der an dem Fensterschachtleistenträger befestigten Fensterschachtleiste. Beispielsweise ist die vorstehend erwähnte Glasdichtung an dem Fensterschachtleistenträger angeordnet beziehungsweise befestigt oder wird von diesem ausgebildet. Die Fensterschachtleiste verdeckt nun den Fensterschachtleistenträger außenseitig, also wiederum auf der der Außenumgebung des Kraftfahrzeugs zugewandten Seite, zumindest bereichsweise, insbesondere größtenteils. Insoweit stellt die Fensterschachtleiste ein Sichtteil des Kraftfahrzeugs dar, welches den Fensterschachtleistenträger wenigstens bereichsweise, insbesondere vollständig, optisch kaschiert beziehungsweise überdeckt. Der Fensterschachtleistenträger kann beispielsweise zumindest teilweise aus Kunststoff bestehen. Die Fensterschachtleiste besteht dagegen bevorzugt aus einem optisch ansprechenderen Material, beispielsweise aus Metall. Besonders bevorzugt besteht die Fensterschachtleiste aus Aluminium oder einer Aluminiumlegierung. Auch eine Fensterschachtleiste aus Kunststoff ist jedoch realisierbar.

Der Fensterschachtleistenträger ist an der Fahrzeughaut befestigbar, während die Fensterschachtleiste wiederum an dem Fensterschachtleistenträger befestigt ist. Vorzugsweise ist also die Fensterschachtleiste ausschließlich über den Fensterschachtleistenträger an der Fahrzeughaut befestigt beziehungsweise greift ausschließlich über den Fensterschachtleistenträger an dieser an. Der Fensterschachtleistenträger verfügt über den Versteifungskern, welcher beispielsweise aus Metall sein kann. Insbesondere besteht der Versteifungskern aus Stahl, bevorzugt Federstahl.

Es ist Aufgabe der Erfindung, eine Fensterschachtleistenanordnung vorzuschlagen, welche gegenüber bekannten Fensterschachtleistenanordnungen Vorteile aufweist, insbesondere eine optisch gefälligere Ausführung und eine verbesserte Funktionalität ermöglicht.

Dies wird erfindungsgemäß mit einer Fensterschachtleistenanordnung mit den Merkmalen des Anspruchs 1 erreicht. Dabei ist vorgesehen, dass in einer Leuchtmittelaufnahmeöffnung der Fensterschachtleiste ein Leuchtmittel angeordnet ist und der Versteifungskern die Leuchtmittelaufnahmeöffnung wenigstens bereichsweise übergreifend aus der Trägerhöhle herausragt, sodass der Versteifungskern zumindest bereichsweise als Reflektor für das Leuchtmittel dient.

Im Querschnitt gesehen verfügt die Fensterschachtleiste über die Leuchtmittelaufnahmeöffnung. Die Leuchtmittelaufnahmeöffnung ist vorzugsweise randoffen ausgestaltet, sodass das in der Leuchtmittelaufnahmeöffnung angeordnete Leuchtmittel durch eine Mündungsöffnung der Leuchtmittelaufnahmeöffnung Licht in Richtung einer Außenumgebung des Kraftfahrzeugs beziehungsweise der Fensterschachtleistenanordnung abgeben kann. Das Leuchtmittel kann sich ausgehend von einem ersten Ende der Fensterschachtleiste bis hin zu einem zweiten Ende erstrecken, welches dem ersten Ende gegenüberliegt. Somit weist das Leuchtmittel eine Längserstreckung in Richtung der Längsmittelachse der Fensterschachtleiste auf, welche der Längserstreckung der Fensterschachtleiste selbst zumindest im Wesentlichen oder genau entspricht.

Das Leuchtmittel kann, muss jedoch nicht durchgehend ausgebildet sein. Besonders bevorzugt verläuft das Leuchtmittel jedoch durchgehend von dem ersten Ende bis hin zu dem zweiten Ende der Fensterschachtleiste. Auch eine unterbrochene Ausgestaltung beziehungsweise eine lediglich abschnittsweise Ausbildung des Leuchtmittels kann jedoch vorgesehen sein. Selbstverständlich kann das Leuchtmittel auch nur einen Teil der Längserstreckung der Fensterschachtleiste aufweisen beziehungsweise übergreifen. Bevorzugt ist die Leuchtmittelaufnahmeöffnung derart ausgerichtet, dass das in ihr vorliegende Leuchtmittel eine Beleuchtungsrichtung aufweist, die in Richtung des Fensterschachtleistenträgers beziehungsweise der Fahrzeughaut weist. Es kann daher vorgesehen sein, mithilfe des Leuchtmittels die Fahrzeughaut direkt mit Licht zu beaufschlagen, sodass ein Leuchtstreifen entlang der Fahrzeughaut entsteht.

Weil jedoch die Fahrzeughaut üblicherweise keine guten Reflektionseigenschaften aufweist, ist ein zusätzlicher Reflektor vorgesehen, mittels welchem das von dem Leuchtmittel erzeugte Licht in Richtung der Außenumgebung umgelenkt wird. Bevorzugt ist der Reflektor zwischen der Leuchtmittelaufnahmeöffnung beziehungsweise dem Leuchtmittel und der Fahrzeughaut angeordnet, sodass zumindest ein Teil des Lichts, insbesondere der größte Teil des Lichts, welches mittels des Leuchtmittels erzeugt wird, auf den Reflektor trifft. Insbesondere ist der Teil des Lichts, welcher unmittelbar auf den Reflektor trifft, größer als derjenige Teil, welcher unmittelbar auf die Fahrzeughaut trifft. Der Reflektor weist eine entsprechende Erstreckung beziehungsweise einen entsprechenden Überstand über die Trägerhülle auf.

Im Rahmen einer weiteren Ausgestaltung der Erfindung ist vorgesehen, dass der Versteifungskern außerhalb der Trägerhülle einen der Leuchtmittelaufnahmeöffnung gegenüberliegenden Reflektorbereich und einen in der Trägerhülle aufgenommenen Kernbereich aufweist, wobei der Reflektorbereich andere Oberflächeneigenschaften aufweist als der Kernbereich. Der Versteifungskern ist wenigstens bereichsweise in der Trägerhülle aufgenommen. Bevorzugt ist dies für den gesamten Kernbereich der Fall, während der Reflektorbereich außerhalb der Trägerhülle vorliegt. Der Versteifungskern und die Trägerhülle bestehen bevorzugt aus verschiedenen Materialien. Insbesondere ist das Material, aus welchem der Versteifungskern besteht, steifer als das Material der Trägerhülle.

Der Reflektorbereich und der Kernbereich sind bevorzugt mit unterschiedlichen Oberflächeneigenschaften ausgestattet. So kann beispielsweise der Versteifungskern in dem Reflektorbereich eine geringere Rauheit aufweisen als in dem Kernbereich. Beispielsweise ist der Reflektorbereich wenigstens bereichsweise, insbesondere vollständig, poliert, um eine besonders geringe Rauheit und dafür besonders gute Reflektionseigenschaften zu erzielen. Der Kernbereich weist dagegen eine größere Rauheit auf, welche insbesondere derart bemessen ist, dass ein gutes Anhaften der Fahrzeughaut an dem Versteifungskern beziehungsweise dem Kernbereich erzielt wird. Bevorzugt wird bei der Herstellung des Fensterschachtleistungsträgers der Versteifungskern mit der Trägerhülle umspritzt, beispielsweise im Rahmen eines Spritzgießverfahrens.

Eine bevorzugte Ausführungsform der Erfindung sieht vor, dass der Versteifungskern in dem Reflektorbereich eine geringere Rauheit aufweist als in dem Kernbereich. Hierauf wurde vorstehend bereits eingegangen. Die unterschiedlichen Rauheiten von Reflektorbereich und Kernbereich wird beispielsweise durch unterschiedliche Oberflächenbearbeitung erzielt. Bevorzugt wird der Reflektorbereich mittels eines ersten Oberflächenbearbeitungsverfahrens und der Kernbereich mittels eines anderen zweiten Oberflächenbearbeitungsverfahrens bearbeitet. Das erste Oberflächenbearbeitungsverfahren kann beispielsweise Polieren sein, wohingegen das zweite Oberflächenbearbeitungsverfahren Aufrauen, beispielsweise durch Schleifen oder Sandstrahlen, ist.

Eine Weiterbildung der Erfindung sieht vor, dass der Versteifungskern - im Querschnitt gesehen - eine in einem freien Ende der Trägerhülle vorliegende Durchtrittsöffnung durchgreift, sodass zumindest der Reflektorbereich aus der Trägerhülle herausragt. Der Querschnitt liegt vorzugsweise senkrecht bezüglich einer Längsmittelachse der Fensterschachtleiste beziehungsweise des Versteifungskerns vor. Der Versteifungskern ragt durch die Durchtrittsöffnung aus der Trägerhülle heraus. Die Durchtrittsöffnung ist dabei in einem freien Ende der Trägerhülle ausgebildet, wobei das freie Ende vorzugsweise in Form einer freien Kante vorliegt, welche sich über die gesamte Längserstreckung des Versteifungskerns erstreckt.

Der Versteifungskern ist derart angeordnet, dass zumindest der Reflektorbereich aus der Trägerhülle herausragt beziehungsweise außerhalb von dieser angeordnet ist. Es kann vorgesehen sein, dass der Reflektorbereich sich unmittelbar an den Kernbereich anschließt. Selbstverständlich kann der Reflektorbereich jedoch auch über einen Verbindungsbereich mit dem Kernbereich verbunden sein. Der Verbindungsbereich kann grundsätzlich beliebige Oberflächeneigenschaften aufweisen. Vorzugsweise weist er dieselbe Rauheit auf wie der Kernbereich oder der Reflektorbereich. Auch eine zwischen der Rauheit des Reflektorbereichs und der Rauheit des Kernbereichs liegende Rauheit kann vorgesehen sein.

Eine bevorzugte Ausgestaltung der Erfindung sieht vor, dass die Durchtrittsöffnung der Fahrzeughaut gegenüberliegend ausgebildet ist, sodass der Reflektorbereich in Richtung der Fahrzeughaut ragt. Beispielsweise ist die Fahrzeughaut der Durchtrittsöffnung gegenüberliegend in Richtung der Außenumgebung gekrümmt ausgestaltet, sodass der aus der Durchtrittsöffnung herausragende Reflektorbereich der Fahrzeughaut entgegentritt. Es kann jedoch auch eine entsprechende Ausgestaltung des Reflektorbereichs, insbesondere eine Krümmung des Reflektorbereichs vorgesehen sein. Von Bedeutung ist dabei lediglich, dass der Reflektorbereich ausgehend von der Durchtrittsöffnung in die von der Durchtrittsöffnung hin zu der Außenumgebung weisende Richtung - zumindest im Querschnitt gesehen - einen abnehmenden Abstand von der Fahrzeughaut aufweist.

Eine weitere Ausführungsform der Erfindung sieht vor, dass der Reflektorbereich sich in Richtung eines freien Endes des Versteifungskerns an die Fahrzeughaut annähert. Unter dem freien Ende des Versteifungskerns ist bevorzugt wiederum eine freie Kante zu verstehen, welche sich über die gesamte Längserstreckung des Versteifungskerns erstreckt. Das freie Ende liegt insoweit im Querschnitt gesehen vor. Wie vorstehend bereits erläutert, soll sich der Reflektorbereich ausgehend von der Durchtrittsöffnung der Fahrzeughaut annähern. Bevorzugt weist dabei das freie Ende des Versteifungskerns den geringsten Abstand von der Fahrzeughaut auf. Umgekehrt bedeutet dies auch, dass sich der Reflektorbereich bis hin zu dem freien Ende des Versteifungskerns erstreckt.

Eine weitere bevorzugte Ausführungsform der Erfindung sieht vor, dass die Fensterschachtleiste im Querschnitt gesehen eine mittels eines Trennstegs von der Leuchtmittelaufnahmeöffnung separierte Trägeraufnahmeöffnung aufweist, die den Fensterschachtleistenträger bereichsweise aufnimmt. Im Querschnitt gesehen verfügt die Fensterschachtleiste also über mehrere Öffnungen, nämlich zumindest die Leuchtmittelaufnahmeöffnung und die Trägeraufnahmeöffnung. Beide Öffnungen sind randoffen ausgestaltet, wobei die Trägeraufnahmeöffnung in Richtung des Fensterschachtleistenträgers geöffnet ist. Dabei ist der Fensterschachtleistenträger zumindest teilweise in der Trägeraufnahmeöffnung derart angeordnet, dass die Fensterschachtleiste an dem Fensterschachtleistenträger gehalten ist. Die Leuchtmittelaufnahmeöffnung und die Trägeraufnahmeöffnung werden von dem Trennsteg voneinander separiert. Der Trennsteg erstreckt sich ausgehend von einem Grundkörper der Fensterschachtleiste generell gesprochen in Richtung der Fahrzeughaut beziehungsweise des Fensterschachtleistenträgers.

Eine besonders bevorzugte Ausführungsform der Erfindung sieht vor, dass der Versteifungskern, insbesondere der Reflektorbereich, an der Fensterschachtleiste, insbesondere an dem Trennsteg, linienförmig anliegt. Beispielsweise liegt die Fensterschachtleiste dabei an dem vorstehend erwähnten Verbindungsbereich des Versteifungskerns an, welcher zwischen dem Reflektorbereich und dem Kernbereich vorliegt beziehungsweise diese miteinander verbindet. Insbesondere ragt der Trennsteg, der die Leuchtmittelaufnahmeöffnung von der Trägeraufnahmeöffnung separiert, derart in Richtung des Versteifungskerns, dass er an diesem beziehungsweise an seinem Reflektorbereich anliegt. Dieses Anliegen erfolgt vorzugsweise linienförmig, insbesondere durchgehend über die gesamte Längserstreckung der Fensterschachtleiste beziehungsweise des Versteifungskerns hinweg.

Eine bevorzugte weitere Ausführungsform der Erfindung sieht vor, dass die Trägeraufnahmeöffnung auf ihrer dem Trennsteg gegenüberliegenden Seite von einem Haltesteg begrenzt ist, der in eine Halteaufnahme des Fensterschachtleistenträgers eingreift. Der Haltesteg dient der Befestigung der Fensterschachtleiste an dem Fensterschachtleistenträger. Hierzu greift er in die Halteaufnahme des Fensterschachtleistenträgers ein. Die Halteaufnahme erstreckt sich im Querschnitt gesehen vorzugsweise zumindest im Wesentlichen parallel zu der Fahrzeughaut. Der Haltesteg ist bevorzugt bezüglich des vorstehend erwähnten Grundkörpers der Fensterschachtleiste angewinkelt, insbesondere schließt er mit diesem einen spitzen Winkel ein, also einen Winkel der kleiner ist als 90°.

Im Rahmen einer weiteren Ausführungsform der Erfindung kann vorgesehen sein, dass der Trennsteg an einer Stützfläche des Fensterschachtleistenträgers anliegt und von dem Trennsteg ein Rastvorsprung ausgeht, der in eine an die Stützfläche angrenzende Rastausnehmung des Fensterschachtleistenträgers rastend eingreift. Auch der Trennsteg dient insoweit der Befestigung der Fensterschachtleiste an dem Fensterschachtleistenträger. Die Fensterschachtleiste stützt sich mittels des Trennstegs an dem Fensterschachtleistenträger ab, nämlich indem der Trennsteg an der Stützfläche anliegt. Von dem Trennsteg geht der Rastvorsprung aus, der in die Rastausnehmung des Fensterschachtleistenträgers derart eingreift, dass eine Hintergriffsverbindung vorliegt. Durch das Zusammenwirken von Haltesteg und Rastvorsprung mit dem Fensterschachtleistenträger beziehungsweise ihrem Eingreifen in die entsprechenden Ausnehmungen, also die Halteaufnahme und die Rastausnehmung, ist die Fensterschachtleiste zuverlässig, jedoch beschädigungsfrei demontierbar an dem Fensterschachtleistenträger gehalten.

Eine weitere Ausführungsform der Erfindung sieht vor, dass die Leuchtmittelaufnahmeöffnung auf ihrer dem Trennsteg abgewandten Seite von einer Innenseite einer gekrümmten Außenwand der Fensterschachtleiste begrenzt ist, wobei im Querschnitt gesehen zwischen der Fensterschachtleiste, insbesondere einem freien Ende der Fensterschachtleiste, und dem Fensterschachtleistenträger, insbesondere dem Reflektorbereich, ein Leuchtspalt ausgebildet ist. Die Leuchtmittelaufnahmeöffnung wird einerseits von dem Trennsteg und andererseits von der Innenseite der gekrümmten Außenwand der Fensterschachtleiste begrenzt. Die Außenwand ist dabei Bestandteil des Grundkörpers, von welchem der Trennsteg ausgeht, insbesondere unter einem Winkel, der zwischen 145° und 135° liegen kann. Vorzugsweise ist die Innenseite der Außenwand ebenfalls gekrümmt, sodass insgesamt eine die Leuchtmittelaufnahmeöffnung begrenzende Wand, welche teilweise von der Innenseite und teilweise von dem Trennsteg gebildet ist, durchgehend gekrümmt verläuft. Besonders bevorzugt weist die Wand über einen Großteil ihrer Erstreckung in Umfangsrichtung bezüglich einer Längsmittelachse der Leuchtmittelaufnahmeöffnung gesehen eine konstante Krümmung auf, sodass sie wenigstens bereichsweise teilkreisförmig ist und entsprechend die Leuchtmittelaufnahmeöffnung im Querschnitt bereichsweise rund ist.

Um das Austreten von mittels des Leuchtmittels erzeugtem Licht aus der Leuchtmittelaufnahmeöffnung in Richtung der Außenumgebung zu ermöglichen, ist der Leuchtspalt zwischen der Fensterschachtleiste und dem Fensterschachtleistenträger ausgebildet. Insbesondere liegt der Leuchtspalt zwischen dem freien Ende der Fensterschachtleiste und dem Reflektorbereich des Fensterschachtleistenträgers beziehungsweise des Versteifungskerns vor. Der Leuchtspalt erstreckt sich bevorzugt durchgehend über die gesamte Längserstreckung der Fensterschachtleiste beziehungsweise des Fensterschachtleistenträgers. Auch eine unterbrochene Ausgestaltung des Leuchtspalts zur Erzielung eines bestimmten Leuchtmusters kann vorgesehen sein. Ebenso ist es möglich, dass der Leuchtspalt sich über lediglich einen Teil der Längserstreckung erstreckt.

Eine Weiterbildung der Erfindung sieht vor, dass der Reflektorbereich im Querschnitt gesehen in Richtung seines freien Endes von der Fensterschachtleiste fort gekrümmt oder geknickt ist. Vorstehend wurde bereits erläutert, dass der Versteifungskern an der Fensterschachtleiste anliegt, insbesondere linienförmig. Ausgehend von der Anlagestelle des Versteifungskerns an der Fensterschachtleiste soll sich der Abstand zwischen ihnen in Richtung der Außenumgebung vergrößern, sodass zwischen der Fensterschachtleiste und dem Fensterschachtleistenträger der Leuchtspalt ausgebildet ist. Hierzu ist der Versteifungskern beziehungsweise sein Reflektorbereich entsprechend gekrümmt oder geknickt.

Eine bevorzugte Ausgestaltung der Erfindung sieht vor, dass der Versteifungskern aus einem steiferen Material besteht als die Trägerhülle und/oder die Fensterschachtleiste. Hierauf wurde vorstehend bereits hingewiesen. Der Versteifungskern besteht bevorzugt aus einem Metall, beispielsweise Stahl, insbesondere Federstahl. Auch die Fensterschachtleiste kann aus Metall hergestellt sein, bevorzugt besteht sie aus Aluminium oder einer Aluminiumlegierung. Die Trägerhülle besteht dagegen bevorzugt aus einem Kunststoff, insbesondere aus elastischem Kunststoff, sodass hervorragende Dichteigenschaften der Fensterschachtleistenanordnung erzielt werden können. Es kann vorgesehen sein, dass der Versteifungskern aus einem steiferen Material besteht als die Fensterschachtleiste und diese wiederum aus einem steiferen Material als die Trägerhülle.

Eine bevorzugte weitere Ausführungsform der Erfindung sieht vor, dass der Fensterschachtleistenträger wenigstens eine an der Fensterschachtleiste anliegende, insbesondere die Trägeraufnahmeöffnung durchgreifende, Dichtlippe aufweist. Die Dichtlippe verhindert, dass Feuchtigkeit zwischen der Dichtlippe und der Fensterschachtleiste hindurch zwischen die Fensterschachtleiste und den Kunststoffträger gelangen kann. Hierzu durchgreift die Dichtlippe bevorzugt die Trägeraufnahmeöffnung und teilt insoweit die Trägeraufnahmeöffnung im Querschnitt gesehen in zwei Teilbereiche auf.

Schließlich kann im Rahmen einer weiteren Ausgestaltung der Erfindung vorgesehen sein, dass die Fensterschachtleiste als ein mit einer Oberflächenschicht versehenes Extrusionsbauteil vorliegt. Die Fensterschachtleiste liegt als Extrusionsbauteil vor, weist also entlang ihrer Längsmittelachse bevorzugt zumindest größtenteils, insbesondere durchgehend, einen konstanten Querschnitt auf. Besonders bevorzugt ist die Fensterschachtleiste durchgehend gerade, sodass auch ihre Längsmittelachse durchgehend gerade ist. Selbstverständlich kann jedoch auch eine gekrümmte Ausgestaltung der Fensterschachtleiste realisiert sein, sodass entsprechend ein gekrümmter Verlauf der Längsmittelachse vorliegt. Die Fensterschachtleiste ist mit der Oberflächenschicht versehen, welche zum einen als Schutz gegenüber Umgebungseinflüssen und andererseits zur optisch gefälligeren Ausgestaltung dient. Die Fensterschachtleiste weist zwei in Richtung ihrer Längsmittelachse einander gegenüberliegende Enden auf, nämlich das erste Ende und das zweite Ende. An diesen kann die Fensterschachtleiste zumindest teilweise verschlossen sein.

Eine weitere Ausgestaltung der Erfindung sieht vor, dass die Fensterschachtleiste einstückig ausgebildet ist. Weiterhin kann die Fensterschachtleiste materialeinheitlich sein, also durchgehend aus demselben Material bestehen.

Im Rahmen einer weiteren Ausgestaltung der Erfindung ist vorgesehen, dass die Oberflächenschicht als Oberflächenbehandlungsschicht oder als Oberflächenbeschichtung vorliegt. In ersterem Fall wird die Oberflächenschicht durch eine Oberflächenbehandlung der Fensterschachtleiste erzielt. Ist die Oberflächenschicht als Oberflächenbeschichtung ausgestaltet, so wird zusätzliches Material auf die Fensterschachtleiste aufgebracht. Die Oberflächenbehandlungsschicht kann beispielsweise durch Anodisieren der Fensterschachtleiste hergestellt sein, während die Oberflächenbeschichtung beispielsweise als Lackschicht, Pulverschicht oder Folienschicht vorliegt und entsprechend durch Lackieren, Pulverbeschichten oder Folieren hergestellt wird.

Im Rahmen einer bevorzugten weiteren Ausgestaltung der Erfindung ist vorgesehen, dass die Trägeraufnahmeöffnung von der Dichtlippe in einen ersten Aufnahmeöffnungsbereich und einen zweiten Aufnahmeöffnungsbereich aufgeteilt wird. Die Dichtlippe des Fensterschachtleistenträgers, die an der Fensterschachtleiste anliegt, durchgreift insoweit die Trägeraufnahmeöffnung, vorzugsweise vollständig. Sowohl der erste Aufnahmeöffnungsbereich als auch der zweite Aufnahmeöffnungsbereich sind insoweit von der Fensterschachtleiste und dem Fensterschachtleistenträger im Querschnitt gesehen vollständig umgriffen und werden von der Dichtlippe voneinander separiert. Beispielsweise kann in einem der Aufnahmeöffnungsbereiche eine Verkabelung für eine Stromversorgung des Leuchtmittels vorgesehen sein. Selbstverständlich kann alternativ auch ein Lichtwellenleiter in einem der Aufnahmeöffnungsbereiche vorliegen, an welchem das Leuchtmittel angeschlossen ist.

Eine weitere bevorzugte Ausgestaltung der Erfindung sieht vor, dass das Leuchtmittel im Querschnitt und in Umfangsrichtung bezüglich seiner Längsmittelachse gesehen zu mindestens 50 %, mindestens 60 %, mindestens 70 % oder mindestens 75 % von der Fensterschachtleiste umgriffen ist. Mit einer derartigen Ausgestaltung der Fensterschachtleiste beziehungsweise des Leuchtmittels ist das Leuchtmittel sicher in der Leuchtmittelaufnahme gehalten. Beispielsweise ist es vorgesehen, das Leuchtmittel bei einer Montage der Fensterschachtleistenanordnung in die Leuchtmittelaufnahmeöffnung einzuklipsen.

Eine Weiterbildung der Erfindung sieht vor, dass das Leuchtmittel im Querschnitt rund ist. Auch andere Ausführungsformen können jedoch grundsätzlich realisiert sein.

Eine weitere Ausgestaltung der Erfindung sieht vor, dass das Leuchtmittel als optischer Lichtwellenleiter oder als eine Vielzahl von Leuchten aufweisende Leuchtenanordnung vorliegt. Im Falle des Lichtwellenleiters verläuft dieser bevorzugt durchgehend von dem ersten Ende bis hin zu dem zweiten Ende. Alternativ kann das Leuchtmittel eine Vielzahl von Leuchten, beispielsweise Leuchtdioden, aufweisen, welche zu der Leuchtenanordnung zusammengefasst sind.

Eine weitere bevorzugte Ausgestaltung der Erfindung sieht vor, dass das Leuchtmittel eine schlauchförmige Hülle aufweist, in der der Lichtwellenleiter und/oder die Leuchtenanordnung aufgenommen ist. Die schlauchförmige Hülle dient dem Schutz des Lichtwellenleiters beziehungsweise der Leuchtenanordnung vor Umgebungseinflüssen. Zudem ermöglicht die Hülle eine einfache Montage, insbesondere sofern sie elastisch ist.

Eine weitere Ausführungsform der Erfindung sieht vor, dass der Rastvorsprung bezüglich des Trennstegs im Querschnitt gesehen angewinkelt ist, insbesondere senkrecht auf ihm steht. Mit einer derartigen Anordnung des Rastvorsprungs wird eine besonders vorteilhafte Rastwirkung erzielt.

Schließlich kann es im Rahmen einer weiteren Ausführungsform der Erfindung vorgesehen sein, dass der Haltesteg im Querschnitt gesehen beidseitig an einem ersten Materialbereich des Fensterschachtleistenträgers und der Trennsteg und/oder der Rastvorsprung jeweils zumindest einseitig an einem zweiten Materialbereich des Fensterschachtleistenträgers anliegen, wobei der Fensterschachtleistenträger in dem ersten Materialbereich andere Materialeigenschaften aufweist als in dem zweiten Materialbereich, insbesondere aus einem weicheren Material besteht. Der Fensterschachtleistenträger setzt sich insoweit aus mehreren Materialbereichen, zumindest dem ersten Materialbereich und dem zweiten Materialbereich, zusammen. Hierzu ist der Fensterschachtleistenträger beispielsweise mittels eines Mehrkomponentenspritzverfahrens hergestellt.

Im Querschnitt gesehen liegt nun der Haltesteg sowohl auf seiner ersten Seite als auch auf seiner der ersten Seite gegenüberliegenden zweiten Seite an dem ersten Materialbereich an. Auch die vorstehend bezeichnete Dichtlippe des Fensterschachtleistenträgers kann dem ersten Materialbereich zugeordnet sein. Der Trennsteg beziehungsweise der Rastvorsprung liegt nun zumindest einseitig an dem zweiten Materialbereich an. Besonders bevorzugt ist die Rastausnehmung des Fensterschachtleistenträgers, in welchem der Rastvorsprung angeordnet ist, vollständig in dem zweiten Materialbereich ausgebildet. Bevorzugt besteht der erste Materialbereich aus einem weicheren Material als der zweite Materialbereich. Auf diese Art und Weise wird eine besonders gute Stützwirkung des Fensterschachtleistenträgers für die Fensterschachtleiste erzielt.

Die Erfindung betrifft selbstverständlich weiterhin ein Kraftfahrzeug mit einer Fensterschachtleistenanordnung gemäß den Ausführungen in dieser Beschreibung. Die Fensterschachtleistenanordnung kann gemäß den vorstehenden Ausführungen weitergebildet sein, sodass insoweit auf diese verwiesen wird.

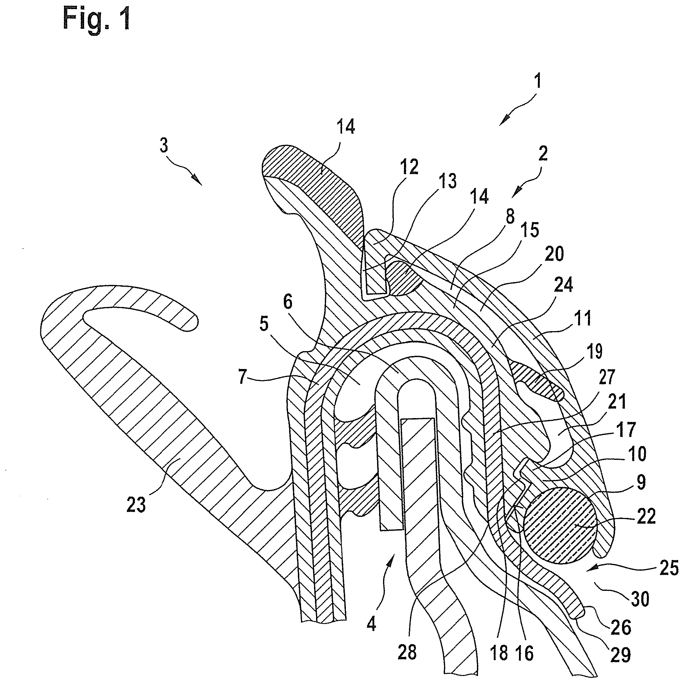

Die Erfindung wird nachfolgend anhand der in der Zeichnung dargestellten Ausführungsbeispiele näher erläutert, ohne dass eine Beschränkung der Erfindung erfolgt. Dabei zeigt die einzige

Figur eine schematische Querschnittsdarstellung einer Fensterschachtleistenanordnung, die eine Fensterschachtleiste sowie einen Fensterschachtleistenträger aufweist.

Die Figur zeigt eine schematische Querschnittdarstellung einer Fensterschachtleistenanordnung 1 zur Anordnung an einem Kraftfahrzeug. Die Fensterschachtleistenanordnung dient dabei zur Abdeckung, insbesondere zur zumindest bereichsweisen Abdeckung, eines Fensterschachts des Kraftfahrzeugs, welcher hier nicht näher dargestellt ist. Die Fensterschachtleistenanordnung 1 weist eine Fensterschachtleiste 2 auf, welche bevorzugt als Extrusionsbauteil vorliegt und weiter bevorzugt an zwei in Richtung ihrer Längsmittelachse gegenüberliegenden Enden jeweils zumindest bereichsweise, insbesondere vollständig, verschlossen ist. Zusätzlich zu der Fensterschachtleiste 2 liegt ein Fensterschachtleistenträger 3 vor. Dieser dient der Befestigung der Fensterschachtleiste 2 an einer Fahrzeughaut 4, welche hier beispielhaft angedeutet ist. Bevorzugt weist der Fensterschachtleistenträger 3 eine Fahrzeughautaufnahme 5 auf, welche der Aufnahme eines Randbereichs, nämlich einer freien Kante 6 der Fahrzeughaut 4 dient. Der Fensterschachtleistenträger 3 weist weiterhin einen Versteifungskern 7 auf, welcher bereichsweise vom Material des Fensterschachtleistenträgers 3 umschlossen ist.

Die Fensterschachtleiste 2 verfügt über eine Trägeraufnahmeöffnung 8 und eine Leuchtmittelaufnahmeöffnung 9. Beide Aufnahmeöffnungen 8 und 9 sind randoffen ausgebildet und werden von einem Trennsteg 10 im Querschnitt gesehen separiert. Der Trennsteg 10 geht von einem Grundkörper 11 der Fensterschachtleiste 2 aus. Auf ihrer dem Trennsteg 10 abgewandten Seite ist die Trägeraufnahmeöffnung 8 von einem Haltesteg 12 begrenzt, der in eine Halteaufnahme 13 des Fensterschachtleistenträgers 3 eingreift. Der Haltesteg 12 liegt dabei vorzugsweise lediglich an einem Materialbereich 14 des Fensterschachtleistenträgers 3 an, in welchem dieser aus einem weicheren Material besteht als in einem zweiten Materialbereich 15.

Der Trennsteg 10 liegt an einer planen Stützfläche 16 des Fensterschachtleistenträgers 3 an. Von dem Trennsteg 10 geht ein Rastvorsprung 17 aus, der in eine Rastausnehmung 18 des Fensterschachtleistenträgers 3 eingreift. Die Rastausnehmung 18 und die Stützfläche 16 liegen bevorzugt vollständig in dem zweiten Materialbereich 15. Eine Dichtlippe 19, die vorzugsweise in dem ersten Materialbereich 14 liegt beziehungsweise von diesem ausgebildet wird, durchgreift ausgehend von dem Fensterschachtleistenträger 3 die Trägeraufnahmeöffnung 8 vollständig und liegt auf ihrer dem Fensterschachtleistenträger 3 abgewandten Seite an der Fensterschachtleiste 2 beziehungsweise deren Grundkörper 11 an. Insoweit unterteilt die Dichtlippe 19 die Trägeraufnahmeöffnung 8 in einen ersten Aufnahmeöffnungsbereich 20 und einen zweiten Aufnahmeöffnungsbereich 21.

In der Leuchtmittelaufnahmeöffnung 9 ist ein Leuchtmittel 22 angeordnet, welches vorzugsweise im Querschnitt gesehen rund ist. Das Leuchtmittel 22 liegt beispielsweise in Form eines Lichtwellenleiters vor, welcher derart mit einer Beschichtung vorgesehen ist, dass entlang seiner Längserstreckung Licht aus ihm austritt. Mithin ist der Lichtwellenleiter als sogenannter "Light String" ausgestaltet. Die Leuchtmittelaufnahmeöffnung 9 beziehungsweise ihre Mündungsöffnung ist derart ausgerichtet, dass das Leuchtmittel 22 in Richtung der Fahrzeughaut 4 leuchtet. Dabei ist das Leuchtmittel 22 in Richtung der Längsmittelachse der Fensterschachtleiste 2 vorzugsweise durchgehend ausgebildet und erstreckt sich von dem ersten Ende bis hin zu dem zweiten Ende.

Weiter ist erkennbar, dass an dem Fensterschachtleistenträger 3 eine Glasdichtung 23 ausgebildet ist, welche nach einer Montage der Fensterschachtleistenanordnung 1 an dem Kraftfahrzeug an einer Verglasung anliegt, insbesondere dichtend anliegt. Weiterhin wird deutlich, dass eine Trägerhülle 24 des Fensterschachtleistenträgers 3 den Versteifungskern 7 lediglich bereichsweise aufnimmt. Das bedeutet, dass der Versteifungskern 7 aus der Trägerhülle 24 herausragt. Dies ist dabei derart vorgesehen, dass der Versteifungskern 7 die Leuchtmittelaufnahmeöffnung 9 wenigstens bereichsweise übergreift und mithin zumindest bereichsweise als Reflektor 25 für das Leuchtmittel 22 dient. Insbesondere besteht der Versteifungskern 7 aus einem außerhalb der Trägerhülle 24 liegenden Reflektorbereich 26 und einer in der Trägerhülle 24 aufgenommenen Kernbereich 27. Der Reflektorbereich 26 liegt dabei der Leuchtmittelaufnahmeöffnung 9 gegenüber. Bevorzugt weist der Reflektorbereich 26 andere Oberflächeneigenschaften auf als der Kernbereich 27, insbesondere ist er mit einer geringeren Rauheit ausgestaltet. Beispielsweise ist der Reflektorbereich 26 poliert, während der Kernbereich 27 zum besseren Anhaften der Trägerhülle 24 eine entsprechend große Rauheit aufweist.

Der Versteifungskern 7 durchgreift eine Durchtrittsöffnung 28 der Trägerhülle 24, die in einem freien Ende der Trägerhülle 24 ausgebildet ist. Entsprechend ragt zumindest der Reflektorbereich 26 des Versteifungskerns 7 aus der Trägerhülle 24 heraus. Der Reflektorbereich 26 erstreckt sich dabei in Richtung der Fahrzeughaut 4. Ausgehend von der Durchtrittsöffnung 28 in Richtung eines freien Endes 29 des Reflektorbereichs 26 beziehungsweise des Versteifungskerns 7 nimmt insoweit der Abstand zwischen dem Versteifungskern 7 und der Fahrzeughaut 4 im Querschnitt gesehen ab.

Es kann vorgesehen sein, dass der Reflektorbereich 26 lediglich auf seiner dem Leuchtmittel 22 beziehungsweise der Leuchtmittelaufnahmeöffnung 9 zugewandten Seite die vorstehend beschriebenen Oberflächeneigenschaften, insbesondere die geringere Rauheit als der Kernbereich 27 aufweist. Es kann weiter vorgesehen sein, dass der Reflektorbereich 26 auf seiner dem Leuchtmittel 22 beziehungsweise der Leuchtmittelaufnahmeöffnung 9 abgewandten Seite dieselben Oberflächeneigenschaften aufweist wie der Kernbereich 27, insbesondere dieselbe Rauheit. Auf diese Art und Weise muss lediglich ein geringerer Oberflächenbereich des Versteifungskerns 7 zur Erzielung besserer Reflektionseigenschaften oberflächenbehandelt, insbesondere poliert, werden.

Es ist erkennbar, dass die Fensterschachtleiste 2, nämlich der Trennsteg 10, an dem Versteifungskern 7 beziehungsweise dessen Reflektorbereich 26 anliegt. Dieses Anliegen erfolgt bevorzugt linienförmig, nämlich insbesondere über die gesamte Längserstreckung der Fensterschachtleiste 2 oder des Fensterschachtleistenträgers 3 beziehungsweise seines Versteifungskerns 7. Ausgehend von dieser Anlagestelle wird der Abstand zwischen der Fensterschachtleiste 2 und dem Versteifungskern 7 in Richtung des freien Endes 29 zumindest im Querschnitt gesehen größer, sodass auf einer der Anlagestelle abgewandten Seite zwischen dem Versteifungskern 7 und der Fensterschachtleiste 2 ein Leuchtspalt 30 ausgebildet ist, durch welchen mittels des Leuchtmittels 22 erzeugtes Licht in Richtung einer Außenumgebung austreten kann. Zur Ausbildung des Leuchtspalts 30 ist der Reflektorbereich 26 beispielsweise im Querschnitt gesehen in Richtung seines freien Endes 29 von der Fensterschachtleiste 2 fort gekrümmt.

Mit der hier beschriebenen Fensterscheibenschachtanordnung 1 wird sowohl eine zuverlässige Abdichtung des Fensterschachts als auch eine optisch gefällige Ausgestaltung des Kraftfahrzeugs erzielt. Durch das Herausragen des Versteifungskerns 7 aus der Trägerhülle 24 wird zudem auf kostengünstige Art und Weise ein Reflektor 25 für das Leuchtmittel 22 mit hervorragenden Reflektionseigenschaften realisiert.

## Patentansprüche

1. Fensterschachtleistenanordnung (1) zur zumindest bereichsweisen Abdeckung eines Fensterschachts eines Kraftfahrzeugs, mit einem an einer Fahrzeughaut (4) befestigbaren, einen Versteifungskern (7) und eine den Versteifungskern (7) aufnehmende Trägerhülle (24) aufweisenden Fensterschachtleistenträger (3) sowie einer an dem Fensterschachtleistenträger (3) befestigten Fensterschachtleiste (2), wobei der Fensterschachtleistenträger (3) eine Fahrzeughautaufnahme (5) zur bereichsweisen Aufnahme der Fahrzeughaut (4) aufweist und die Fensterschachtleiste (2) auf einer der Fahrzeughautaufnahme (5) abgewandten Seite des Fensterschachtleistenträgers (3) an dem Fensterschachtleistenträgers (3) befestigt ist, wobei in einer Leuchtmittelaufnahmeöffnung (9) der Fensterschachtleiste (2) ein Leuchtmittel (22) angeordnet ist, **dadurch gekennzeichnet, dass** der Versteifungskern (7) die Leuchtmittelaufnahmeöffnung (9) wenigstens bereichsweise übergreifend aus der Trägerhülle (24) herausragt, sodass der Versteifungskern (7) zumindest bereichsweise als Reflektor (25) für das Leuchtmittel (22) dient.

2. Fensterschachtleistenanordnung nach Anspruch 1, **dadurch gekennzeichnet, dass** der Versteifungskern (7) außerhalb der Trägerhülle (24) einen der Leuchtmittelaufnahmeöffnung (9) gegenüberliegenden Reflektorbereich (26) und einen in der Trägerhülle (24) aufgenommenen Kernbereich (27) aufweist, wobei der Reflektorbereich (26) andere Oberflächeneigenschaften aufweist als der Kernbereich (27).

3. Fensterschachtleistenanordnung nach einem der vorhergehenden Ansprüche, **dadurch gekennzeichnet, dass** der Versteifungskern (7) in dem Reflektorbereich (26) eine geringere Rauheit aufweist als in dem Kernbereich.

4. Fensterschachtleistenanordnung nach einem der vorhergehenden Ansprüche, **dadurch gekennzeichnet, dass** der Versteifungskern (7) - im Querschnitt gesehen - eine in einem freien Ende der Trägerhülle (24) vorliegende Durchtrittsöffnung (28) durchgreift, sodass zumindest der Reflektorbereich (26) aus der Trägerhülle (24) herausragt.

5. Fensterschachtleistenanordnung nach einem der vorhergehenden Ansprüche, **dadurch gekennzeichnet, dass** die Durchtrittsöffnung (28) der Fahrzeughaut (4) gegenüberliegend ausgebildet ist, sodass der Reflektorbereich (26) in Richtung der Fahrzeughaut (4) ragt.

6. Fensterschachtleistenanordnung nach einem der vorhergehenden Ansprüche, **dadurch gekennzeichnet, dass** der Reflektorbereich (26) sich in Richtung eines freien Endes (29) des Versteifungskerns (7) an die Fahrzeughaut (4) annähert.

7. Fensterschachtleistenanordnung nach einem der vorhergehenden Ansprüche, **dadurch gekennzeichnet, dass** die Fensterschachtleiste (2) im Querschnitt gesehen eine mittels eines Trennstegs (10) von der Leuchtmittelaufnahmeöffnung (9) separierte Trägeraufnahmeöffnung (8) aufweist, die den Fensterschachtleistenträger (3) bereichsweise aufnimmt.

8. Fensterschachtleistenanordnung nach einem der vorhergehenden Ansprüche, **dadurch gekennzeichnet, dass** der Versteifungskern (7), insbesondere der Reflektorbereich (26), an der Fensterschachtleiste (2), insbesondere an dem Trennsteg (10), linienförmig anliegt.

9. Fensterschachtleistenanordnung nach einem der vorhergehenden Ansprüche, **dadurch gekennzeichnet, dass** die Trägeraufnahmeöffnung (8) auf ihrer dem Trennsteg (10) gegenüberliegenden Seite von einem Haltesteg (12) begrenzt ist, der in eine Halteaufnahme (13) des Fensterschachtleistenträgers (3) eingreift.

10. Fensterschachtleistenanordnung nach einem der vorhergehenden Ansprüche, **dadurch gekennzeichnet, dass** der Trennsteg (10) an einer Stützfläche (16) des Fensterschachtleistenträgers (3) anliegt und von dem Trennsteg (10) ein Rastvorsprung (17) ausgeht, der in eine an die Stützfläche (16) angrenzende Rastausnehmung (18) des Fensterschachtleistenträgers (3) rastend eingreift.

11. Fensterschachtleistenanordnung nach einem der vorhergehenden Ansprüche, **dadurch gekennzeichnet, dass** die Leuchtmittelaufnahmeöffnung (9) auf ihrer dem Trennsteg (10) abgewandten Seite von einer Innenseite einer gekrümmten Außenwand der Fensterschachtleiste (2) begrenzt ist, wobei im Querschnitt gesehen zwischen der Fensterschachtleiste (2), insbesondere einem freien Ende der Fensterschachtleiste (2), und dem Fensterschachtleistenträger (3), insbesondere dem Reflektorbereich (26), ein Leuchtspalt (30) ausgebildet ist.

12. Fensterschachtleistenanordnung nach einem der vorhergehenden Ansprüche, **dadurch gekennzeichnet, dass** der Reflektorbereich (26) im Querschnitt gesehen in Richtung seines freien Endes (29) von der Fensterschachtleiste (2) fort gekrümmt oder geknickt ist.

13. Fensterschachtleistenanordnung nach einem der vorhergehenden Ansprüche, **dadurch gekennzeichnet, dass** der Versteifungskern (7) aus einem steiferen Material besteht als die Trägerhülle (24) und/oder die Fensterschachtleiste (2).

14. Fensterschachtleistenanordnung nach einem der vorhergehenden Ansprüche, **dadurch gekennzeichnet, dass** der Fensterschachtleistenträger (3) wenigstens eine an der Fensterschachtleiste (2) anliegende, insbesondere die Trägeraufnahmeöffnung (8) durchgreifende, Dichtlippe (19) aufweist.

15. Fensterschachtleistenanordnung nach einem der vorhergehenden Ansprüche, **dadurch gekennzeichnet, dass** die Fensterschachtleiste (2) als ein mit einer Oberflächenschicht versehenes Extrusionsbauteil vorliegt.

## Claims

1. A window bay runner arrangement (1) for covering at least sections of a window bay of a motor vehicle, comprising a window bay runner carrier (3) which can be secured on a vehicle skin (4) and has a reinforcing core (7) and a carrier sleeve (24) accommodating the reinforcing core (7), as well as comprising a window bay runner (2) secured to the window bay runner carrier (3), wherein the window bay runner carrier (3) has a vehicle skin receiving means (5) for receiving sections of the vehicle skin (4), and the window bay runner (2) is secured to the window bay runner carrier (3) on a side of the window bay runner carrier (3) facing away from the vehicle skin receiving means (5), wherein a lamp (22) is arranged in a lamp-receiving opening (9) of the window bay runner (2) **characterized in that** the reinforcing core (7) protrudes out of the carrier sleeve (24) overlapping with at least sections of the lamp-receiving opening (9), such that at least sections of the reinforcing core (7) function as a reflector (25) for the lamp (22).

2. The window bay runner arrangement according to claim 1, **characterized in that** the reinforcing core (7) has a reflector region (26) opposite the lamp-receiving opening (9) and a core region (27) received in the carrier sleeve (24), wherein the reflector region (26) has different surface properties than the core region (27).

3. The window bay runner arrangement according to any one of the preceding claims, **characterized in that** the reinforcing core (7) in the reflector region (26) has a lower roughness than in the core region.

4. The window bay runner arrangement according to any one of the preceding claims, **characterized in that** the reinforcing core (7) - seen in cross-section - passes through a passage opening (28) present in a free end of the carrier sleeve (24), so that at least the reflector region (26) extends out of the carrier sleeve (24).

5. The window bay runner arrangement according to any one of the preceding claims, **characterized in that** the passage opening (28) is formed opposite of the vehicle skin (4), so that the reflector region (26) protrudes in the direction of the vehicle skin (4).

6. The window bay runner arrangement according to any one of the preceding claims, **characterized in that** the reflector portion (26) approaches the vehicle skin (4) towards a free end (29) of the reinforcing core (7).

7. The window bay runner arrangement according to any one of the preceding claims, **characterized in that**, seen in cross-section, the window bay runner (2) has a carrier receiving opening (8) separated from the lamp-receiving opening (9) by means of a separating web (10), which carrier receiving opening receives at least sections of the window bay runner carrier (3).

8. The window bay runner arrangement according to any one of the preceding claims, **characterized in that** the reinforcing core (7), in particular the reflector region (26), linearly rests against the window bay runner (2), in particular at the separating web (10).

9. The window bay runner arrangement according to any one of the preceding claims, **characterized in that** the carrier receiving opening (8) on its side opposite the separating web (10) is delimited by a holding web (12), which engages in a holding receiving means (13) of the window bay runner carrier (3).

10. The window bay runner arrangement according to any one of the preceding claims, **characterized in that** the separating web (10) rests against a support surface (16) of the window bay runner carrier (3) and a latching projection (17) extends from the separating web (10), which projection engages in a latching manner into a latching recess (18) of the window bay runner carrier (3) adjacent a support surface (16).

11. The window bay runner arrangement according to any one of the preceding claims, **characterized in that** the lamp-receiving opening (9) is delimited on its side facing away from the separating web (10) by an inner side of a curved outer wall of the window bay runner (2), wherein, seen in cross-section, between the window bay runner (2), in particular a free end of the window bay runner (2), and the window bay runner carrier (3), in particular the reflector region (26), a lighting gap (30) is formed.

12. The window bay runner arrangement according to any one of the preceding claims, **characterized in that** the reflector region (26), as seen in cross-section, is curved or bent away from the window bay runner (2) in the direction of its free end (29).

13. The window bay runner arrangement according to any one of the preceding claims, **characterized in that** the reinforcing core (7) consists of a stiffer material than the carrier sleeve (24) and/or the window bay runner (2).

14. The window bay runner arrangement according to any one of the preceding claims, **characterized in that** the window bay runner carrier (3) has at least one sealing lip (19) resting on the window bay runner (2) and which in particular passes through the carrier receiving opening (8).

15. The window bay runner arrangement according to any one of the preceding claims, **characterized in that** the window bay runner (2) is provided as an extruded component provided with a surface layer.

## Revendications

1. Arrangement de baguette de puits de fenêtre (1) destiné à recouvrir au moins par zones un puits de fenêtre d'un véhicule à moteur, comportant un support de baguette de puits de fenêtre (3) pouvant être fixé à une coque de véhicule (4) et comportant un noyau de renfort (7) et une gaine de support (24) recevant le noyau de renfort (7) ainsi qu'une baguette de puits de fenêtre (2) fixée au support de baguette de puits de fenêtre (3), dans lequel le support de baguette de puits de fenêtre (3) comporte un logement de coque de véhicule (5) pour loger par zones la coque de véhicule (4) et la baguette de puits de fenêtre (2) est fixée au support de baguette de puits de fenêtre (3) sur un côté du support de baguette de puits de fenêtre (3) opposé au logement de coque de véhicule (5), dans lequel un moyen d'éclairage (22) est disposé dans une ouverture de logement de moyen d'éclairage (9) de la baguette de puits de fenêtre (2), **caractérisé en ce que** le noyau de renfort (7) dépasse l'ouverture de logement de moyen d'éclairage (9) en débordant hors de la gaine de support (24) au moins par zones, de sorte que le noyau de renfort (7) sert au moins par zones de réflecteur (25) pour le moyen d'éclairage (22).

2. Arrangement de baguette de puits de fenêtre selon la revendication 1, **caractérisé en ce que** le noyau de renfort (7) comporte à l'extérieur de la gaine de support (24) une zone de réflecteur (26) opposée à l'ouverture de logement de moyen d'éclairage (9) et une zone de noyau (27) logée dans la gaine de support (24), dans lequel la zone de réflecteur (26) présente d'autres propriétés de surface que la zone de noyau (27).

3. Arrangement de baguette de puits de fenêtre selon l'une des revendications précédentes, **caractérisé en ce que** le noyau de renfort (7) présente dans la zone de réflecteur (26) une rugosité plus basse que dans la zone de noyau.

4. Arrangement de baguette de puits de fenêtre selon l'une des revendications précédentes, **caractérisé en ce que** le noyau de renfort (7), vu en coupe transversale, traverse une ouverture de passage (28) existant à une extrémité libre de la gaine de support (24) de sorte qu'au moins la zone de réflecteur (26) dépasse de la gaine de support (24).

5. Arrangement de baguette de puits de fenêtre selon l'une des revendications précédentes, **caractérisé en ce que** l'ouverture de passage (28) est réalisée à l'opposé de la coque de véhicule (4), de sorte que la zone de réflecteur (26) saillit en direction de la coque de véhicule (4).

6. Arrangement de baguette de puits de fenêtre selon l'une des revendications précédentes, **caractérisé en ce que** la zone de réflecteur (26) s'approche de la coque de véhicule (4) dans la direction d'une extrémité libre (29) du noyau de renfort (7).

7. Arrangement de baguette de puits de fenêtre selon l'une des revendications précédentes, **caractérisé en ce que** la baguette de puits de fenêtre (2) comporte, vu en coupe transversale, une ouverture de logement de support (8), séparée de l'ouverture de logement de moyen d'éclairage (9) au moyen d'une nervure de séparation (10), laquelle ouverture de logement de support loge par zones le support de baguette de puits de fenêtre (3).

8. Arrangement de baguette de puits de fenêtre selon l'une des revendications précédentes, **caractérisé en ce que** le noyau de renfort (7), en particulier la zone de réflecteur (26), s'appuie de manière linéaire contre la baguette de puits de fenêtre (2), en particulier sur la nervure de séparation (10).

9. Arrangement de baguette de puits de fenêtre selon l'une des revendications précédentes, **caractérisé en ce que** l'ouverture de logement de support (8) est délimitée sur son côté opposé à la nervure de séparation (10) par une nervure de maintien (12), laquelle entre en prise dans un logement de maintien (13) du support de baguette de puits de fenêtre (3).

10. Arrangement de baguette de puits de fenêtre selon l'une des revendications précédentes, **caractérisé en ce que** la nervure de séparation (10) s'appuie contre une surface de soutien (16) du support de baguette de puits de fenêtre (3) et de la nervure de séparation (10) émane une saillie d'encliquetage (17), laquelle entre en prise par encliquetage dans un évidement d'encliquetage (18), adjacent à la surface de soutien (16), du support de baguette de puits de fenêtre (3).

11. Arrangement de baguette de puits de fenêtre selon l'une des revendications précédentes, **caractérisé en ce que** l'ouverture de logement de moyen d'éclairage (9) est délimitée, sur son côté opposé à la nervure de séparation (10), par un côté interne d'une paroi externe recourbée de la baguette de puits de fenêtre (2), dans lequel une fente d'éclairage (30) est, vu en coupe transversale, réalisée entre la baguette de puits de fenêtre (2), en particulier une extrémité libre de la baguette de puits de fenêtre (2), et le support de baguette de puits de fenêtre (3), en particulier la zone de réflecteur (26).

12. Arrangement de baguette de puits de fenêtre selon l'une des revendications précédentes, **caractérisé en ce que** la zone de réflecteur (26), vu en coupe transversale, est recourbée ou coudée à partir de la baguette de puits de fenêtre (2) dans la direction de son extrémité libre (29).

13. Arrangement de baguette de puits de fenêtre selon l'une des revendications précédentes, **caractérisé en ce que** le noyau de renfort (7) est constitué d'un matériau plus rigide que la gaine de support (24) et/ou que la baguette de puits de fenêtre (2).

14. Arrangement de baguette de puits de fenêtre selon l'une des revendications précédentes, **caractérisé en ce que** le support de baguette de puits de fenêtre (3) comporte au moins une lèvre d'étanchéité (19) s'appuyant contre la baguette de puits de fenêtre (2), en particulier traversant l'ouverture de logement de support (8).

15. Arrangement de baguette de puits de fenêtre selon l'une des revendications précédentes, **caractérisé en ce que** la baguette de puits de fenêtre (2) existe en tant que composant extrudé prévu doté d'une couche superficielle.
